# FASCICULE DE BREVET EUROPEEN

(11) **EP 3 194 814 B1**
(45) Date de publication et mention de la délivrance du brevet: **12.09.2018**
(21) Numéro de dépôt: 15753965.1
(22) Date de dépôt: 20.07.2015
(51) Int. Cl.: F16H 59/02, F16H 59/04

(54) **DISPOSITIF DE COMMANDE D'UNE BOÎTE DE VITESSE**
VORRICHTUNG ZUR STEUERUNG EINES GETRIEBES
DEVICE FOR CONTROLLING A GEARBOX

(30) Priorité: 13.08.2014 FR 1457778
(43) Date de publication de la demande: 26.07.2017
(73) Titulaire: PSA Automobiles SA, 78300 Poissy (FR)
(72) Inventeur: MARTINAT, Yoann, F-78310 Maurepas (FR)
(86) Numéro de dépôt international: PCT/FR2015/051996
(87) Numéro de publication internationale: WO 2016/024055

(56) Documents cités:
- EP-A1- 2 754 922
- WO-A1-02/070297
- WO-A1-02/078995
- JP-A- H0 488 250

## Description

L'invention se rapporte à un levier de vitesse pour véhicule automobile avec système de filtrage acoustique.

Afin de passer les rapports, le conducteur actionne le levier de vitesse en le déplaçant d'avant en arrière et de droite à gauche, selon ses besoins. Le levier doit résister à l'utilisation qu'en fait le conducteur, et ce pendant la durée de vie du véhicule.

Le mouvement de rotation du levier de vitesse est géré au niveau du support de levier de vitesse. Dans le support de levier de vitesse se trouve une sphère, laquelle est fermement maintenue entre des coussinets. Ces coussinets participent à la fluidité du mouvement de la sphère dans le boîtier. Ces coussinets sont eux-mêmes maintenus dans le support de levier de vitesse grâce à des joints en matériau souple de type EPDM (Ethylène-Propylène-Diène-Monomère). Ces joints sont conçus dans un matériau suffisamment déformable pour jouer un rôle de filtre acoustique. Un tel support de levier comprenant toutes les caractéristiques du préambule de la revendication 1 est connu de la publication WO 02/070297 A1.

Sous l'effet des contraintes successives sur les joints, ceux-ci s'affaissent et un jeu se créé entre l'ensemble sphère + coussinets et le support de levier de vitesse. Le ralenti moteur peut alors provoquer un mouvement indésirable de la sphère dans son support, et ce mouvement génère un bruit dans l'habitacle, également indésirable.

Ces problématiques sont connues des constructeurs. A ce sujet, le brevet américain publié sous le numéro US 5247848 décrit un support de levier de vitesse comprenant un siège définissant une cavité recevant une sphère solidaire d'un levier de vitesse. Le siège annulaire est produit dans un matériau élastique. Le siège comprend, sur sa périphérie, une série de fentes donnant sur la cavité où est logée la sphère. Un anneau surplombe le siège et comprend une série de languettes dont le nombre est égal aux fentes pratiquées dans le siège. Ces languettes sont logées dans les fentes et empêchent un déplacement important du siège dans le boîtier lorsqu'un rapport est violemment passé. Les languettes jouent ainsi le rôle de butoir pour la sphère.

Ce dispositif présente cependant plusieurs inconvénients. Le siège est en matériau déformable afin d'absorber les vibrations de la sphère, mais il présente également une certaine rigidité fonctionnelle afin que la sphère puisse être guidée correctement dans sa cavité. Hors, le siège est en contact direct avec le boîtier. A imaginer que le siège absorbe une partie des vibrations provenant du boîtier, celui-ci en transmet une autre partie au levier de vitesse. Ces vibrations induisent un bruit indésirable et peuvent éventuellement endommager les éléments de structure.

Il s'agit dans la présente invention de remédier aux inconvénients précités.

En conséquence, un premier objectif est de proposer un support de levier de vitesse dans lequel quasi aucune vibration n'est transmise au levier de vitesse.

Un deuxième objectif est de proposer un support de levier de vitesse dont le nombre de pièces à assembler est réduit, ceci afin de faciliter son assemblage tout en diminuant les erreurs dans la chaîne de cotes.

A cet effet, il est proposé, en premier lieu, un support de levier de vitesse comprenant un boîtier muni d'une paroi latérale interne et d'un fond formant ensemble une cavité, ce support de levier de vitesse comprenant un siège, logé dans la cavité, muni d'un coussinet, le coussinet étant monté sur une armature en contact avec le boîtier, le coussinet étant séparé de la paroi latérale par un jeu et étant séparé du fond par l'intermédiaire de l'armature.

Le levier de vitesse ne reçoit ainsi sensiblement aucune vibration, le siège absorbant les vibrations. Le levier de vitesse n'est que peu soumis aux vibrations indésirables.

Diverses caractéristiques supplémentaires peuvent être prévues, seules ou en combinaison :
- le coussinet est fait d'un matériau dur, et l'armature est faite d'un matériau déformable à effet mémoire et absorbant les vibrations ;
- l'armature et le coussinet sont solidaires l'un de l'autre, l'armature étant surmoulée sur le coussinet et présentant une forme générale de cage comprenant une assise et une ceinture reliées par des barreaux;
- le coussinet comprend une série de trous dont les dimensions, à savoir le diamètre et la hauteur sont sensiblement égales aux dimensions des barreaux de l'armature, les barreaux de l'armature logeant dans les trous du coussinet ;
- le siège et scindé en deux parties identiques, à savoir une partie supérieure et une partie inférieure ;
- le coussinet comprend une surface d'appui dont la forme est sphérique, la surface d'appui de la partie supérieure et la surface d'appui de la partie inférieure définissant ensemble un logement pour une sphère ;
- le coussinet comprend une ouverture latérale dont la forme est sensiblement celle d'une vallée.

Il est proposé, en deuxième lieu, un dispositif de commande d'une boîte de vitesse comprenant un support de levier de vitesse dans lequel est logée une sphère solidaire d'un levier de vitesse, ce support de levier de vitesse étant tel que présenté ci dessus.

Dans une réalisation, le dispositif comprend une commande primaire et une commande secondaire, toutes deux solidaires de la sphère.

Il est proposé, en troisième lieu, un véhicule automobile comprenant un dispositif de commande d'une boîte de vitesse tel que présenté ci-dessus.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un dispositif de commande d'une boîte de vitesse,
- la figure 2 est une vue en coupe de la figure 1 selon II-II, avec une vue en médaillon à échelle agrandie,
- la figure 3 est une vue en perspective éclatée d'une partie du siège, montrant une armature et un coussinet.

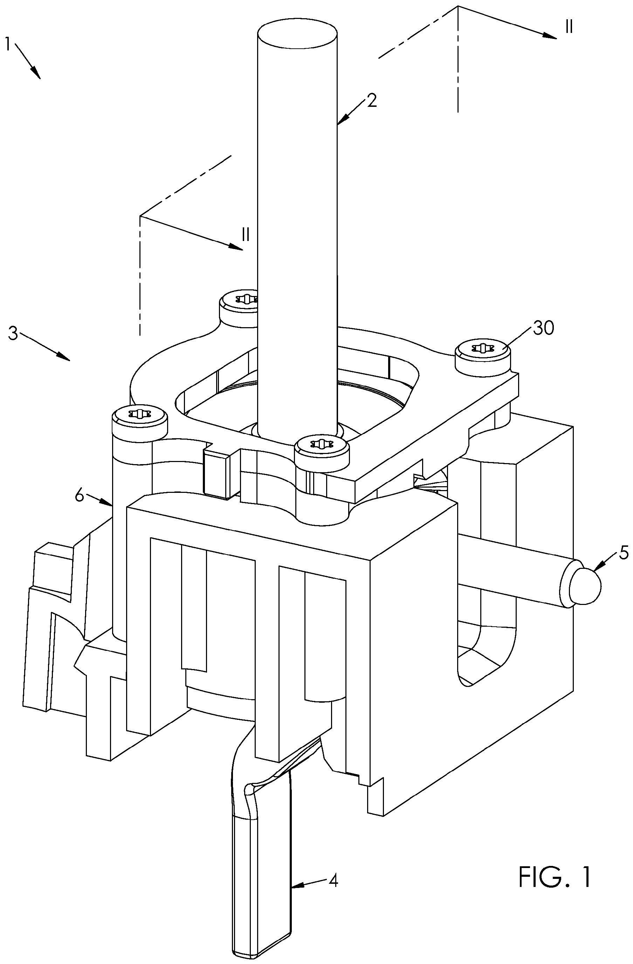

Sur la figure 1 est représenté un dispositif **1** de commande d'une boîte de vitesse (non représentée). Ce dispositif **1** comprend un levier **2** de vitesse et un support **3** de levier de vitesse. La boîte de vitesse est manipulée à l'aide d'une commande **4** primaire et d'une commande **5** secondaire reliées à des câbles de commandes (non représentés).

Le support **3** de levier de vitesse comprend un boîtier **6** muni d'une paroi **7** latérale et d'un fond **8** définissant ensemble une cavité **9** cylindrique. Le fond **8** est substantiellement perpendiculaire à la paroi **7** latérale.

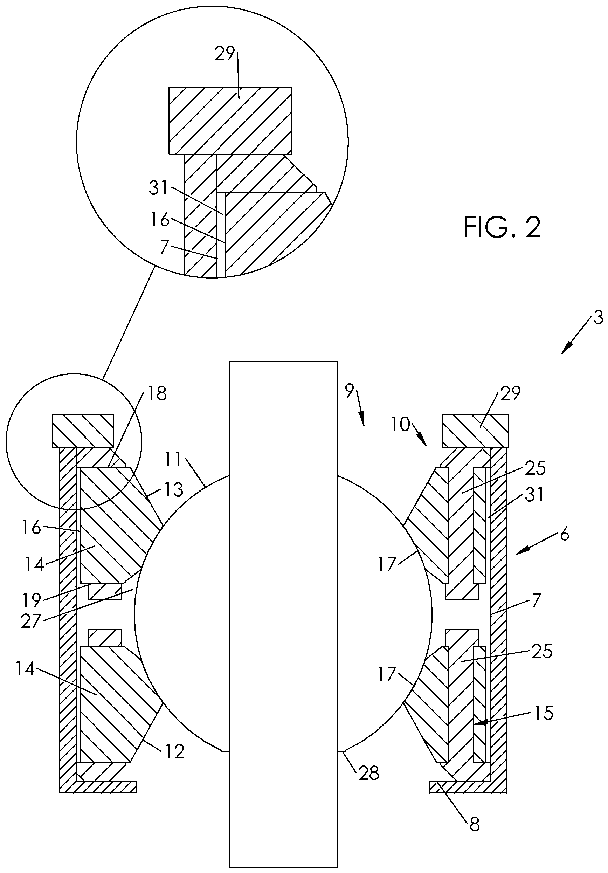

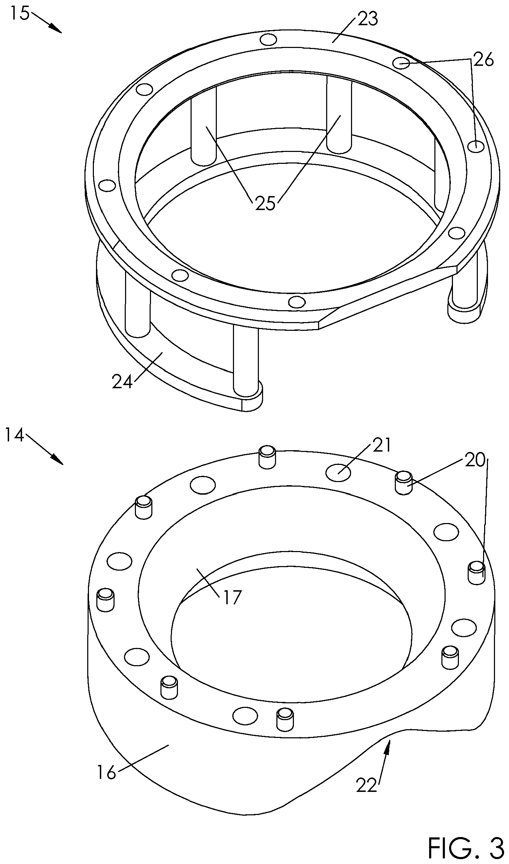

Le support **3** de levier de vitesse comprend un siège **10** représenté en détails sur la figure 2 et une sphère **11**. Dans un mode de réalisation représenté sur les figures, le siège **10** est scindé en deux parties identiques, à savoir une partie **12** inférieure et une partie **13** supérieure. Chaque partie **12**, **13** comprend un coussinet **14** et une armature **15** illustrés en perspective éclatée sur la figure 3.

Le coussinet **14** a une forme générale annulaire et comprend en vue de coupe, plusieurs surfaces fonctionnelles :
- une surface **16** externe,
- une surface **17** interne d'appui,
- une première surface **18** de blocage, et
- une deuxième surface **19** de blocage.
La première surface **18** de blocage et la deuxième surface **19** de blocage sont sensiblement parallèles et transversales. La surface **16** externe est sensiblement perpendiculaire aux surfaces de blocage **18**, **19**. Le coussinet **14** comprend sur sa périphérie, une série de pions **20** de forme cylindrique s'étendant en saillie selon l'axe de révolution du coussinet **14**. Le coussinet **14** comprend également une série de trous **21** traversant de part et d'autre la matière. Une ouverture **22** latérale dont la forme se rapproche de celle d'une vallée, est pratiquée dans le coussinet **14** afin de ne pas entraver le mouvement de la commande **5** secondaire de la boîte de vitesse. La commande **5** secondaire se présente sous la forme d'un doigt en saillie radiale du support **3** de levier de vitesse et solidaire de la sphère **11**.

L'armature **15** est en forme de cage circulaire. Elle comprend une assise **23**, une ceinture **24** et une série de barreaux **25** reliant l'assise **23** à la ceinture **24.** Le diamètre et la hauteur des barreaux **25** sont respectivement identiques au diamètre des trous **21** et à la hauteur du coussinet **14.** L'assise **23** comprend une série de lumières **26** dont les dimensions (diamètre et hauteur) sont identiques à celles des pions **20** du coussinet **14.**

Dans le mode de réalisation représenté sur les figures, l'armature **15** est surmoulée sur le coussinet **14.** Autrement dit, le coussinet **14** est placé dans un moule (non représenté) dont la contre empreinte est à l'image de l'armature **15.** La matière est injectée dans le moule et celle-ci vient en contact intime du coussinet **14.** Cette technique permet d'obtenir un ajustement particulièrement précis de l'armature **15** sur le coussinet **14.** Ainsi, les barreaux **25** de l'armature **15** logent dans les trous **21** du coussinet **14** et les pions **20** du coussinet **14** font de même dans les lumières **26** de l'armature **15.** Tout mouvement axial du coussinet **14** par rapport à l'armature **15** est bloqué grâce à l'action conjointe de l'assise **23** et de la ceinture **24** sur les première et deuxième surfaces **18**, **19** de blocage tandis que les mouvements radiaux sont bloqués par l'intermède des barreaux **25** et des pions **20.** Les pions **20** limitent également la déformation de l'armature **15** vis-à-vis du boîtier **6.** Lors d'un passage de rapports brusque, les pions **20** butent sur le boîtier **6** et ce, au bénéfice de la raideur du levier **2** de vitesse. Autrement dit, sous l'effet d'une contrainte importante, les pions **20** butent sur le boîtier **6** de sorte à limiter la déformation du siège **10.**

Comme il vient de l'être expliqué, le siège **10** est scindé en deux parties identiques. Chaque partie **12**, **13** se compose d'une armature **15** et d'un coussinet **14**, l'armature **15** étant surmoulée sur le coussinet **14.** Dans ce qui suit, le montage du support **3** de levier de vitesse va être décrit.

La partie **12** inférieure du siège **10** est insérée dans le boîtier **6** et l'assise **23** de l'armature **15** repose sur le fond **8.** Le diamètre hors tout de l'armature **15** est à l'erreur de cote près, égal au diamètre interne de la cavité **9.** L'utilisation d'un matériau à effet mémoire pour l'armature **15** permet, idéalement, de palier aux erreurs de la chaîne de cotes. La sphère **11** solidaire du levier **2** de vitesse et solidaire des commandes **4**, **5** primaire et secondaire, est insérée dans la cavité **9** et repose sur la surface **17** d'appui du coussinet **14.** La partie **13** supérieure du siège **10**, identique à la partie **12** inférieure, est alors insérée de telle sorte que les deux parties **12**, **13** inférieure et supérieure soient en vis-à-vis. Autrement dit, la partie **13** supérieure du siège **10** est une symétrie verticale de la partie **12** inférieure. La surface **17** d'appui de la partie **13** supérieure vient au contact de la sphère **11** et définit avec la surface **17** d'appui de la partie **12** inférieure, un logement **27** de la sphère **11.**

Une sphère selon la définition littérale est une surface fermée dont tous les points se trouvent à égale distance d'un point donné. La sphère **11** dont il est question dans la présente description n'est pas parfaitement fidèle à cette définition. La raison est que la sphère **11** présente un méplat **28.** Toutefois, par simplicité, le terme sphère est utilisé dans cette description.

Le coussinet **14** est agencé de telle sorte que sa surface **16** externe soit parallèle à la paroi **7** latérale. Ainsi, un jeu **31** subsiste en permanence entre le coussinet **14** et le boîtier **6.** En conséquence, le coussinet **14** n'est jamais directement au contact du boîtier **6.**

Un couvercle **29** est monté à l'aide de vis **30** sur le boîtier **6** et vient en appui sur l'assise **23** de la partie **13** supérieure du siège **10.** La sphère **11** est alors maintenue dans son logement **27** formé par les coussinets **14.**

La sphère **11** est en liaison rotule avec le siège **10** de telle sorte qu'elle possède trois degrés de liberté, à savoir une rotation selon les trois axes d'un repère orthogonal de l'espace.

Le coussinet **14** est réalisé dans un matériau dur suffisamment rigide afin de conférer à la sphère **11** un guidage harmonieux. Autrement dit, suffisamment rigide pour que le logement **27** de la sphère **11** définit par les surfaces **17** d'appui reste parfaitement sphérique dans le temps.

L'armature **15** est réalisée dans un matériau déformable à effet mémoire. Ainsi l'armature **15** joue le rôle de filtre acoustique en absorbant les vibrations provenant du boîtier **6** et des commandes **4**, **5** primaire et secondaire.

Un détail du contact entre l'armature **15** et le boîtier **6** est illustré sur la figure 2. On y voit clairement un jeu **31** entre le coussinet **14** et la paroi **7** latérale. Le boîtier **6** ne peut ainsi pas transmettre directement les vibrations au coussinet **14.** Les vibrations sont alors transmises à l'armature **15.** L'assise **23** de l'armature **15** qui est au contact du boîtier **6** est la seule zone où les vibrations peuvent être transmises. Toutefois, ces vibrations sont quasi-supprimées grâce à l'armature **15** et ne produisent par conséquent pas de bruit indésirable dans l'habitacle du véhicule, ni de vibrations dans la main du conducteur.

L'invention ainsi décrite permet d'obtenir un certain nombre d'avantages parmi lesquels :
- la quasi-disparition des vibrations dans la main du conducteur au moment où celui-ci s'empare du levier **2** de vitesse,
- la quasi-totale disparition des bruits de manoeuvres,
- la quasi-disparition du bruit indésirable des vibrations dans l'habitacle,
- une grande simplicité de montage, compte tenu du peu de pièces et par conséquent une réduction des erreurs dans la chaîne de cotes.

## Revendications

1. Support (**3**) de levier de vitesse comprenant un boîtier (**6**) muni d'une paroi (**7**) latérale interne et d'un fond (**8**) formant ensemble une cavité (**9**), ce support (**3**) de levier de vitesse comprenant un siège (**10**) logé dans la cavité (**9**) muni d'un coussinet (**14**), le coussinet (**14**) étant monté sur une armature (**15**), **caractérisé en ce que** l'armature est en contact avec le boîtier (**6**), le coussinet (**14**) étant séparé de la paroi (**7**) latérale par un jeu (**31**) et étant séparé du fond (**8**) par l'intermédiaire de l'armature (**15**).

2. Support (**3**) de levier de vitesse selon la revendication 1, **caractérisé en ce que** le coussinet (**14**) est fait d'un matériau dur, et l'armature (**15**) est faite d'un matériau déformable à effet mémoire et absorbant les vibrations.

3. Support (**3**) de levier de vitesse selon l'une quelconque des revendications précédentes, **caractérisé en ce que** l'armature (**15**) et le coussinet (**14**) sont solidaires l'un de l'autre, l'armature (**15**) étant surmoulée sur le coussinet (**14**) et présentant une forme générale de cage comprenant une assise (**23**) et une ceinture (**24**) reliées par des barreaux (**25**)**.**

4. Support (**3**) de levier de vitesse selon la revendication 3, **caractérisé en ce que** le coussinet (**14**) comprend une série de trous (**21**) dont les dimensions, à savoir le diamètre et la hauteur sont sensiblement égales aux dimensions des barreaux (**25**) de l'armature (**15**), les barreaux (**25**) de l'armature (**15**) logeant dans les trous (**21**) du coussinet (**14**)**.**

5. Support (**3**) de levier de vitesse selon l'une quelconque des revendications 1 à 4, **caractérisé en ce que** le siège (**10**) est scindé en deux parties identiques, à savoir une partie (**13**) supérieure et une partie (**12**) inférieure.

6. Support (**3**) de levier de vitesse selon la revendication 5, **caractérisé en ce que** la coussinet (**14**) comprend une surface d'appui dont la forme est sphérique, la surface (**17**) d'appui de la partie (**13**) supérieure et la surface (**17**) d'appui de la partie (**12**) inférieure définissant ensemble un logement (**27**) pour une sphère (**11**)**.**

7. Support (**3**) de levier de vitesse selon l'une quelconque des revendications précédentes **caractérisé en ce que** le coussinet (**14**) comprend une ouverture (**22**) latérale dont la forme est sensiblement celle d'une vallée.

8. Dispositif (**1**) de commande d'une boîte de vitesse comprenant un support (**3**) de levier de vitesse dans lequel est logée une sphère (**11**) solidaire d'un levier (**2**) de vitesse, ce support (**3**) de levier de vitesse étant définit selon l'une quelconque des revendications précédentes.

9. Dispositif (**1**) selon la revendication 8, **caractérisé en ce que** qu'il comprend une commande (**4**) primaire et une commande (**5**) secondaire, toutes deux solidaires de la sphère (**11**)**.**

10. Véhicule automobile comprenant un dispositif (**1**) de commande d'une boîte de vitesse selon l'une quelconque des revendications 8 ou 9.

## Patentansprüche

1. Schalthebelträger (3), der ein Gehäuse (6) umfasst, das mit einer inneren Seitenwand (7) und einem Boden (8) versehen ist, die gemeinsam einen Hohlraum (9) bilden, wobei dieser Schalthebelträger (3) einen Sitz (10) umfasst, der in dem Hohlraum (9) aufgenommen ist, der mit einem Kissen (14) versehen ist, wobei das Kissen (14) auf eine Bewehrung (15) montiert ist, **dadurch gekennzeichnet, dass** die Bewehrung mit dem Gehäuse (6) in Berührung ist, wobei das Kissen (14) von der Seitenwand (7) durch ein Spiel (31) getrennt ist und von dem Boden (8) über die Bewehrung (15) getrennt ist.

2. Schalthebelträger (3) nach Anspruch 1, **dadurch gekennzeichnet, dass** das Kissen (14) aus einem harten Material hergestellt ist, und dass die Bewehrung (15) aus einem verformbaren Material mit Formgedächtnis hergestellt ist und die Schwingungen absorbiert.

3. Schalthebelträger (3) nach einem der vorhergehenden Ansprüche, **dadurch gekennzeichnet, dass** die Bewehrung (15) und das Kissen (14) miteinander fest verbunden sind, wobei die Bewehrung (15) auf dem Kissen (14) übergeformt ist und eine allgemeine Käfigform aufweist, die eine Sitzfläche (23) und einen Gurt (24), die durch Stangen (25) verbunden sind, umfasst.

4. Schalthebelträger (3) nach Anspruch 3, **dadurch gekennzeichnet, dass** das Kissen (14) eine Reihe von Bohrungen (21) umfasst, deren Maße, nämlich der Durchmesser und die Höhe, im Wesentlichen gleich den Maßen der Stangen (25) der Bewehrung (15) sind, wobei die Stangen (25) der Bewehrung (15) in den Bohrungen (21) des Kissens (14) aufgenommen sind.

5. Schalthebelträger (3) nach einem der Ansprüche 1 bis 4, **dadurch gekennzeichnet, dass** der Sitz (10) in zwei identische Teile geteilt ist, nämlich einen oberen Teil (13) und einen unteren Teil (12).

6. Schalthebelträger (3) nach Anspruch 5, **dadurch gekennzeichnet, dass** das Kissen (14) eine Auflageoberfläche umfasst, deren Form kugelförmig ist, wobei die Auflagefläche (17) des oberen Teils (13) und die Auflageoberfläche (17) des unteren Teils (12) gemeinsam eine Aufnahme (27) für eine Kugel (11) bilden.

7. Schalthebelträger (3) nach einem der vorhergehenden Ansprüche, **dadurch gekennzeichnet, dass** das Kissen (14) eine seitliche Öffnung (22) umfasst, deren Form im Wesentlichen die eines Tals ist.

8. Steuervorrichtung (1) eines Schaltgetriebes, die einen Schalthebelträger (3) umfasst, in dem eine Kugel (11), die mit einem Schalthebel (2) fest verbunden ist, aufgenommen ist, wobei dieser Schalthebelträger (3) gemäß einem der vorhergehenden Ansprüche definiert ist.

9. Vorrichtung (1) nach Anspruch 8, **dadurch gekennzeichnet, dass** sie eine Primärsteuerung (4) und eine Sekundärsteuerung (5) umfasst, die beide fest mit der Kugel (11) verbunden sind.

10. Kraftfahrzeug, das eine Steuervorrichtung (1) eines Schaltgetriebes nach einem der Ansprüche 8 oder 9 umfasst.

## Claims

1. Gear lever support (3) comprising a housing (6) provided with an inner sidewall (7) and a bottom (8) together forming a cavity (9), said gear lever support (3) comprising a seat (10) housed in the cavity (9) provided with a bearing (14), the bearing (14) being mounted on a reinforcement (15), **characterized in that** the reinforcement is in contact with the housing (6), the bearing (14) being separated from the sidewall (7) by a clearance (31) and being separated from the bottom (8) by means of the reinforcement (15).

2. Gear lever support (3) according to Claim 1, **characterized in that** the bearing (14) is made from a hard material and the reinforcement (15) is made from a material with shape memory effect which absorbs vibration.

3. Gear lever support (3) according to either of the preceding claims, **characterized in that** the reinforcement (15) and the bearing (14) are integral with each other, the reinforcement (15) being moulded onto the bearing (14) and having the general shape of a cage comprising a base (23) and a ring (24) connected by bars (25).

4. Gear lever support (3) according to Claim 3, **characterized in that** the bearing (14) comprises a series of holes (21) whose dimensions, that is the diameter and height thereof, are substantially equal to the dimensions of the bars (25) of the reinforcement (15), the bars (25) of the reinforcement (15) being seating in the holes (21) of the bearing (14) .

5. Gear lever support (3) according to any one of Claims 1 to 4, **characterized in that** the seat (10) is split into two identical portions, namely an upper portion (13) and a lower portion (12).

6. Gear lever support (3) according to Claim 5, **characterized in that** the bearing (14) comprises a bearing surface whose shape is spherical, the bearing surface (17) of the upper portion (13) and the bearing surface (17) of the lower portion (12) together defining a housing (27) for a sphere (11).

7. Gear lever support (3) according to any one of the preceding claims, **characterized in that** the bearing (14) comprises a lateral opening (22) whose shape is substantially that of a valley.

8. Device (1) for controlling a gearbox comprising a gear lever support (3) in which is housed a sphere (11) that is integral with a gear lever (2), said gear lever support (3) being defined according to any one of the preceding claims.

9. Device (1) according to Claim 8, **characterized in that** it comprises a primary control (4) and a secondary control (5), both being integral with the sphere (11).

10. Motor vehicle comprising a device (1) for controlling a gear box according to any one of Claims 8 or 9.
